**Europäisches Patentamt**

**European Patent Office**

**Office européen des brevets**

(19)

(11) Veröffentlichungsnummer: **0 413 946 A1**

(12) # EUROPÄISCHE PATENTANMELDUNG

(21) Anmeldenummer: **90113454.4**

(22) Anmeldetag: **13.07.90**

(51) Int. Cl.⁵: **D01H 11/00, B01D 46/22**

(30) Priorität: **24.08.89 DE 3927999**

(43) Veröffentlichungstag der Anmeldung:
**27.02.91 Patentblatt 91/09**

(84) Benannte Vertragsstaaten:
**CH DE FR IT LI**

(71) Anmelder: **Zinser Textilmaschinen GmbH**
**Hans-Zinser-Strasse Postfach 1480**
**D-7333 Ebersbach/Fils(DE)**

(72) Erfinder: **Städele, Norbert, Dipl.-Ing. (FH)**
**Papiermühle 86**
**D-7320 Göppingen(DE)**
Erfinder: **Fuchs, Uwe, Dipl.-Ing.**
**Sonnenhalde 25**
**D-6959 Billigheim(DE)**

(54) **Verfahren und Vorrichtung zum Reinigen von Arbeitsstellen an einer Spinnereimaschine.**

(57) Die Erfindung bezieht sich auf ein Verfahren und eine Vorrichtung zum Reinigen von Arbeitsstellen an einer Spinnereimaschine 1 mit mindestens einer Absaugvorrichtung 2, 3, die ein endloses, umlaufendes Filterband 4 aufweist. Hierbei ist das Filterband mit wenigstens zwei unterschiedlichen Geschwindigkeiten antreibbar.

Fig.1

EP 0 413 946 A1

# VERFAHREN UND VORRICHTUNG ZUM REINIGEN VON ARBEITSSTELLEN AN EINER SPINNEREIMASCHINE

Die Erfindung bezieht sich auf ein Verfahren und eine Vorrichtung zum Reinigen von Arbeitsstellen an einer Spinnereimaschine mit mindestens einer Absaugvorrichtung, welche ein endloses, umlaufendes Filterband aufweist.

Als Stand der Technik ist es bereits bekannt, ein Filterband an einer Spinnereimaschine einzusetzen, welches, von einem Elektromotor angetrieben, einen maschinenlangen Unterdruckraum umläuft. Dieses, mit konstanter, relativ langsamer Geschwindigkeit umlaufende Filterband wird an speziellen Reinigungsstellen von anhaftendem Faserflug befreit.

In besonderen Situationen, wenn z.B. wegen eines Partiewechsels an der Spinnereimaschine, beispielsweise einer Ringspinnmaschine, neu angesponnen werden muß, kann es zu vermehrtem Fasermaterialanfall am Filterband kommen. In Solchen Situationen besteht dann die Gefahr, daß das Filterband überladen wird, was zu einem Druckverlust führt. Ein derartiger Druckverlust begünstigt jedoch das unkontrollierte Ablösen von Fasermaterial vom Filterband und ist daher zu vermeiden.

Aufgabe der vorliegenden Erfindung ist es nun, ein Verfahren und eine Vorrichtung zu schaffen, welche gewährleisten, daß eine unerwünschte Überladung des Filterbandes und damit ein Druckverlust einwandfrei vermieden wird.

Diese Aufgabe wird erfindungsgemäß dadurch gelöst, daß das Filterband mit wenigstens zwei unterschiedlichen Geschwindigkeiten antreibbar ist. Hierdurch ergibt sich der Vorteil, daß im Bedarfsfall das Filterband schneller als im Normalfall läuft und entsprechend auf einfache Weise schneller entsorgt, d.h. abgesaugt werden kann. Ist der erhöhte Fasermaterialanfall nicht mehr gegeben, weil beispielsweise das Anspinnen beendet wird, wird der Filterbandantrieb auf eine langsamere Geschwindigkeit zurückgeschaltet.

In weiterer Ausgestaltung der Erfindung kann das Filterband in einer auf den Arbeitszustand der Maschine abgestimmten Geschwindigkeit umlaufen, so daß stets eine funktionsgerechte Anpassung an den jeweiligen Arbeitszustand der Maschine gewährleistet wird. Hierbei kann erfindungsgemäß eine selbsttätige Verstellung von der einen in eine andere Geschwindigkeit des umlaufenden Filterbandes in Abhängigkeit vom Anfall an Absaugmaterial erfolgen.

In weiterer Ausgestaltung der Erfindung kann der Filterbandantrieb drehzahlverstellbar sein, wobei einerseits die Möglichkeit besteht, diesen Filterbandantrieb als polumschaltbare Drehstrommaschine auszubilden. Alternativ besteht auch die Möglichkeit, statt dessen ein mit dem Filterbandantrieb verbundenes, auf verschiedene Geschwindigkeiten umschaltbares Getriebe einzusetzen. Dieses Getriebe kann mit einer automatischen Umschaltvorrichtung verbunden sein, es kann als mehrstufiges oder als stufenloses Getriebe gestaltet werden.

In weiterer Ausgestaltung der Erfindung kann der Filterbandantrieb mit einer Vorrichtung zur Ermittlung des Arbeitszustandes der Maschine und mit einer Steuereinheit verbunden sein. Weiterhin besteht die Möglichkeit, daß der Filterbandantrieb mit mindestens einem Sensor zur Ermittlung des Anfalls an Absaugmaterial und mit einer Steuereinrichtung verbunden ist, so daß die ser Sensor ein selbsttätiges Umschalten des Filterbandantriebes in die gewünschte Geschwindigkeit einleitet.

Die Erfindung wird nachfolgend anhand von in der Zeichnung dargestellten Ausführungsbeispielen näher beschrieben. In der Zeichnung zeigen:

Fig. 1 eine schematische Draufsicht auf eine Spinnereimaschine mit endlosem Filterband;

Fig. 2 eine andere Ausführungsmöglichkeit des Filterbandantriebes, teils gebrochen.

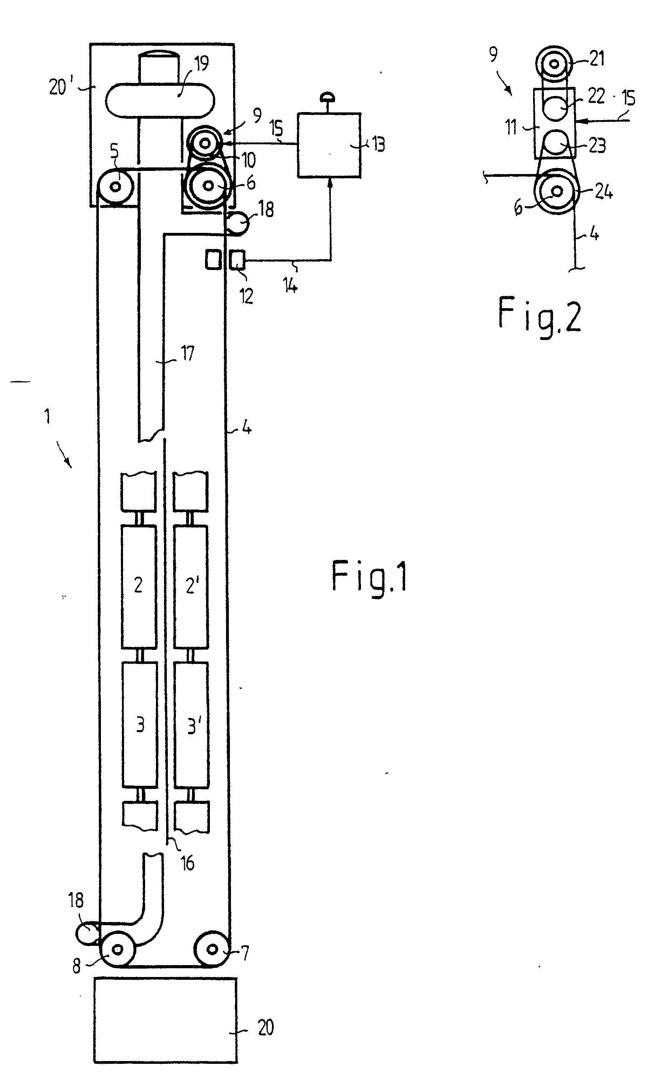

Nach Fig. 1 ist eine Spinnereimaschine 1, beispielsweise eine Ringspinnmaschine, mit mindestens einem Lüfter 2, 2′, 3, 3′ jeweils im Arbeitsbereich ausgestattet. Um diese Lüfter läuft ein endloses, angetriebenes, sich über einen großen Längsbereich der Spinnereimaschine 1 erstreckendes, über Umlenkräder 5, 6, 7, 8 geführtes Filterband 4. Im Bereich der Lüfter 2, 2′, 3, 3′ befindet sich ein Absaugkanal 17, welcher im Bereich beider Endgestelle 20, 20′ der Maschine 1 jeweils mit einer Absaugdüse 18 und im Bereich eines Endgestells 20′ mit einem Ventilator 19 verbunden ist. Zwischen den Lüftern 2 bzw. 2′ und 3 bzw. 3′ befindet sich eine Trennwand 16, welche in Längsrichtung der Spinnereimaschine 1 verläuft.

Das Filterband 4 ist mit einem Antrieb 9 verbunden, welcher so gestaltet ist, daß das Filterband 4 mit wenigstens zwei unterschiedlichen Geschwindigkeiten antreibbar ist. Hierbei kann das Filterband 4 in einer auf den Arbeitszustand der Maschine 1 abgestimmten Geschwindigkeit umlaufen. Die Verstellung von der einen in die andere Geschwindigkeit des umlaufenden Filterbandes kann hierbei in Abhängigkeit vom Anfall an Absaugmaterial, welches sich auf dem Filterband 4 befindet, selbsttätig erfolgen. Der Filterbandantrieb 9 ist drehzahlverstellbar.

Diese Drehzahlverstellbarkeit des Filterbandantriebes 9 kann bei der Ausführungsform nach Fig. 1 durch Einsatz einer polumschaltbaren Drehstrommaschine 10 durchgeführt werden. Diese polumschaltbare Drehstrommaschine 10 kann beispielsweise wahlweise mit einem oder mit zwei Polpaaren betrieben werden. Ein derartiger Motor läuft dann im Normalbetrieb vierpolig mit beispielsweise einer Nenndrehzahl von 1500 Umdrehungen pro Minute und kann bei erhöhtem Fasermaterialanfall auf zweipoligen Betrieb mit einer Nenndrehzahl von 3000 Umdrehungen pro Minute umgeschaltet werden. Das Filterband 4 läuft in diesem Fall dann doppelt so schnell und wird entsprechend schneller entsorgt, d.h., über die Absaugdüse 18, den Absaugkanal 17 und den Ventilator 19 entsprechend gereinigt.

Ist der erhöhte Fasermaterialanfall nicht mehr gegeben, weil beispielsweise das Anspinnen an der Ringspinnmaschine beendet ist, wird der Motor 10 wieder auf vierpoligen Betrieb zurückgeschaltet.

Bei der Ausführungsform nach Fig. 2 besteht die Möglichkeit, daß ein Motor 21, welcher den Filterbandantrieb 9 darstellt, mit einem auf verschiedene Geschwindigkeiten umschaltbaren Getriebe 11 verbunden ist. Über entsprechend gestaltete Zwischenräder 22, 23 und 24 wird das Umlenkrad 6 und damit das Filterband 4 entsprechend angetrieben. Hierbei kann dieses Getriebe 11 mit einer automatischen Umschaltvorrichtung verbunden sein. Eine weitere, nicht näher dargestellte Möglichkeit besteht darin, daß ein mehrstufiges oder ein stufenloses Getriebe Anwendung finden.

Die polumschaltbare Drehstrommmaschine nach Fig. 1 bzw. das schaltbare Getriebe 11 nach Fig. 2 kann mit einer Vorrichtung zur Ermittlung des Arbeitszustandes der Maschine 1 und mit einer Steuereinheit verbunden sein. Hierbei besteht nach Fig. 1 die Möglichkeit, daß ein Sensor 12 Anwendung findet, welcher das Filterband 4 abtastet zur Ermittlung des Anfalles an Absaugmaterial. Über eine Leitung 14 ist der Sensor 12 mit einer Steuereinheit 13 verbunden, welche über eine Leitung 15 entsprechend die polumschaltbare Drehstrommaschine 10 nach Fig. 1 bzw. das Schaltgetriebe 11 nach Fig. 2 steuert. Hierdurch ergibt sich der Vorteil einer selbsttätigen Verstellung von der einen in eine andere Geschwindigkeit des umlaufenden Filterbandes 4 in Abhängigkeit vom Anfall an Absaugmaterial, welches sich auf dem umlaufenden Filterband 4 abgelagert hat.

Durch den Antrieb des Filterbandes 4 mit wenigstens zwei unterschiedlichen Geschwindigkeiten wird auf einfache Weise sichergestellt, daß ein vermehrter Fasermaterialanfall am Filterband 4, und damit dessen Überladung, vermieden wird. Ein unerwünschter Druckverlust ist damit ausgeschlossen.

**Ansprüche**

1. Verfahren zum Reinigen von Arbeitsstellen an einer Spinnereimaschine mit mindestens einer Absaugvorrichtung, die ein endloses, umlaufendes Filterband aufweist, dadurch gekennzeichnet, daß das Filterband (4) mit wenigstens zwei unterschiedlichen Geschwindigkeiten antreibbar ist.

2. Verfahren nach Anspruch 1, dadurch gekennzeichnet, daß das Filterband (4) in einer auf den Arbeitszustand der Maschine (1) abgestimmten Geschwindigkeit umläuft.

3. Verfahren nach Anspruch 1, gekennzeichnet durch eine selbsttätige Verstellung von der einen in eine andere Geschwindigkeit des umlaufenden Filterbandes (4) in Abhängigkeit vom Anfall an Absaugmaterial.

4. Vorrichtung zur Durchführung des Verfahrens nach einem der vorhergehenden Ansprüche, dadurch gekennzeichnet, daß der Filterbandantrieb (9) drehzahlverstellbar ist.

5. Vorrichtung nach Anspruch 4, dadurch gekennzeichnet, daß der Filterbandantrieb (9) als polumschaltbare Drehstrommaschine (10) ausgebildet ist.

6. Vorrichtung nach Anspruch 4, gekennzeichnet durch ein mit dem Filterbandantrieb (9) verbundenes, auf verschiedene Geschwindigkeiten umschaltbares Getriebe (11).

7. Vorrichtung nach Anspruch 6, dadurch gekennzeichnet, daß das Getriebe (11) mit einer automatischen Umschaltvorrichtung verbunden ist.

8. Vorrichtung nach Anspruch 6 und 7, gekennzeichnet durch ein mehrstufiges Getriebe.

9. Vorrichtung nach Anspruch 6 und 7, gekennzeichnet durch ein stufenloses Getriebe.

10. Vorrichtung nach Anspruch 4, dadurch gekennzeichnet, daß der Filterbandantrieb (9) mit einer Vorrichtung zur Ermittlung des Arbeitszustandes der Maschine (1) und mit einer Steuereinheit (13) verbunden ist.

11. Vorrichtung nach Anspruch 4, dadurch gekennzeichnet, daß der Filterbandantrieb (9) mit mindestens einem Sensor (12) zu Ermittlung des Anfalls an Absaugmaterial und mit einer Steuereinrichtung (13) verbunden ist.

Fig.1

Fig.2

| Europäisches Patentamt | **EUROPÄISCHER RECHERCHENBERICHT** | Nummer der Anmeldung |
|---|---|---|
| | | **EP 90 11 3454** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 507 760   (AMERICAN AIR FILTER CO., INC.) <br> * Seite 10, Zeilen 5-18; Seite 4, Zeilen 27-33; Anspruch 9; Figuren 1-3 * <br> — — — | 1,3,4,10, 11 | D 01 H 11/00 <br> B 01 D 46/22 |
| X | CA-A-1 072 890   (T. MUERMANS) <br> * Seite 3, Zeile 30 - Seite 4, Zeile 3; Figuren 1-3 * <br> — — — | 1,2,3,4, 10,11 | |
| X | DE-U-7 117 465   (SIEMENS-ELECTROGERÄTE GmbH) <br> * Seite 2, Zeilen 13-19 * <br> — — — | 4,7,10 | |
| X | DE-U-8 707 893   (HERBERT KANNEGIESSER GmbH & CO.) <br> — — — | 4,7,10 | |
| A | DE-A-1 607 765   (VEB LUFT-FILTER-TECHNIK) <br> * Seite 4, Zeile 37 - Seite 5, Zeile 3; Figur 1 * <br> — — — — — | 1 | |
| | | | RECHERCHIERTE SACHGEBIETE (Int. Cl.5) |
| | | | D 01 H <br> B 65 H <br> B 01 D <br> D 06 F |

Der vorliegende Recherchenbericht wurde für alle Patentansprüche erstellt

| Recherchenort | Abschlußdatum der Recherche | Prüfer |
|---|---|---|
| Den Haag | 20 November 90 | TAMME H.-M.N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument